# EUROPÄISCHE PATENTSCHRIFT

(11) **EP 1 365 035 B1**
(45) Veröffentlichungstag und Bekanntmachung des Hinweises auf die Patenterteilung: **29.12.2004**
(21) Anmeldenummer: 02010322.2
(22) Anmeldetag: 07.05.2002
(51) Int. Cl.: C21D 1/42, C21D 1/30, C21D 1/32, E04H 12/10, H05B 6/02

(54) **Verfahren zur Sanierung von in Stahlgitterbauweise hergestellten Hochspannungsmasten**
Method of maintaining the steel lattice work of high tension masts
Procédé d'entretien de la charpente en acier de pylones à haute tension

(43) Veröffentlichungstag der Anmeldung: 26.11.2003
(73) Patentinhaber: SAG Energieversorgungslösungen GmbH, 60325 Frankfurt am Main (DE)
(72) Erfinder: Galter, Richard, D-63225 Langen (DE); Marthen, Wolfgang, D-60488 Frankfurt (DE)
(74) Vertreter: Rohmann, Michael, Dr.

(56) Entgegenhaltungen:
- EP-A- 0 946 080
- FR-A- 2 545 104
- GB-A- 383 449
- PATENT ABSTRACTS OF JAPAN vol. 1997, no. 08, 29. August 1997 (1997-08-29) & JP 09 100651 A (TOMOE CORP), 15. April 1997 (1997-04-15)
- PATENT ABSTRACTS OF JAPAN vol. 009, no. 267 (C-310), 24. Oktober 1985 (1985-10-24) & JP 60 116725 A (MEIDENSHA KK), 24. Juni 1985 (1985-06-24)
- PATENT ABSTRACTS OF JAPAN vol. 1998, no. 09, 31. Juli 1998 (1998-07-31) & JP 10 096017 A (NKK CORP), 14. April 1998 (1998-04-14)

## Beschreibung

Die Erfindung betrifft ein Verfahren zur Sanierung von in Stahlgitterbauweise hergestellten Hochspannungsmasten mit Stahlprofilen, welche Stahlprofile an ihren Verbindungsstellen Schraubverbindungen mit entsprechenden Schraubenlöchern aufweisen. - Derartige Hochspannungsmasten werden auch als Freileitungsmaste bezeichnet. Die Hochspannungsmasten dienen in der Regel der Übertragung und Verteilung von elektrischer Energie. An die Hochspannungsmasten sind entsprechende Leiterseile angeschlossen. Bei den Hochspannungsmasten handelt es sich normalerweise um Stahlgitterkonstruktionen aus Stahlprofilen. Die Stahlprofile bilden einerseits vier Eckstiele an den Ecken eines Hochspannungsmastes sowie auch Diagonalprofile zur Verbindung der Eckstiele und Horizontaltraversen. Die Stahlprofile der Stahlgitterkonstruktion sind an den Verbindungsstellen des Gitterwerkes mit geschraubten Verbindungen versehen. Hierzu sind in den Stahlprofilen Schraubenlöcher für entsprechende Verbindungsschrauben vorgesehen.

Hochspannungsmasten bzw. Freileitungsmasten sind besondere Stahlgitterkonstruktionen, an die hohe Anforderungen in Bezug auf Gebrauchstüchtigkeit und Sicherheit gestellt werden. Wenn ein Hochspannungsmast versagt, so ist das Versagen ganzer Hochspannungsleitungen oder Hochspannungsleitungsabschnitte der elektrischen Stromversorgung die Folge. Die Hochspannungsmasten müssen deshalb besonderen Vorschriften genügen und werden entsprechend auf Gebrauchstüchtigkeit und Sicherheit überwacht. - Bei höheren mechanischen Belastungen, insbesondere bei Zugbelastungen können nichtsdestoweniger Schadensfälle auftreten, die insbesondere auf Risse bzw. Brüche in den Stahlprofilen zurückgehen. Solche hohen mechanischen Belastungen treten beispielsweise bei extremen Wetterbedingungen wie bei Stürmen mit hoher Windenergie auf.

Demgegenüber liegt der Erfindung das technische Problem zugrunde, ein Verfahren der eingangs genannten Art anzugeben, mit dem Beschädigungen wie Risse oder Brüche an den Stahlprofilen effektiv vermieden werden können und somit die Wahrscheinlichkeit eines Schadensfalles an einem Hochspannungsmast wirksam verringert werden kann.

Zur Lösung dieses technischen Problems lehrt die Erfindung ein Verfahren der eingangs genannten Art, welches dadurch gekennzeichnet ist, dass versprödete Schraubenlochrandzonen der Schraubenlöcher auf eine Temperatur von mindestens 700 °C erhitzt werden, und anschließend wieder abgekühlt werden. Es liegt im Rahmen der Erfindung, dass die Erhitzung mit der Maßgabe erfolgt, dass die Versprödung beseitigt oder zumindest reduziert wird. Bei der auf die Erhitzung folgenden Abkühlung kann es sich zweckmäßigerweise um eine allmähliche Abkühlung bei Umgebungsbedingungen handeln, ohne dass besondere Maßnahmen zur Abkühlung erforderlich sind.

Der Erfindung liegt zunächst die Erkenntnis zugrunde, dass die Stahlprofile von Hochspannungsmasten insbesondere im Bereich der Schraubenlöcher, d. h. in den Schraubenlochrandzonen Versprödungen erfahren bzw. Versprödungen aufweisen. Dies ist zumindest zum Teil auf die Werkstoffeigenschaften der Stahlprofile zurückzuführen. In der Vergangenheit wurden viele Hochspannungsmasten aus niedrig legiertem Baustahl gefertigt, der nach dem Thomas-Verfahren hergestellt wurde. Auch auf andere Weise erschmolzene Stähle zeigen bei grobem Ausgangsgefüge und Kaltverformung Versprödungsvorgänge. Die entsprechenden Stahlprofile neigen insbesondere in kaltverformten Bereichen stärker zu Versprödungen. Von Versprödungen sind insbesondere die Schraubenlochrandzonen der Schraubenlöcher in den Stahlprofilen betroffen. Vor allem bei Zugbelastungen der Stahlprofile erfolgt eine Spannungserhöhung entsprechend dem Kerbfaktor im Schraubenlochrandbereich. Bei genügend duktilem, zähem Werkstoffverhalten kann sich bei hoher Belastung der Werkstoff lokal verformen, so dass sich eine gleichmäßige Spannungsverteilung im Restquerschnitt oder Nettoquerschnitt einstellt. Bei spröden Werkstoffen bzw. in Versprödungsbereichen können die auftretenden Spannungsspitzen aber nicht abgebaut werden. Wenn der Werkstoff kein Verformungsvermögen zeigt, erfolgt im Schraubenlochrandbereich relativ schnell der Beginn eines Risses in dem Werkstoff. Insbesondere die Versprödungen in den Schraubenlochrandzonen können somit zu Rissen und Brüchen führen, wenn der Hochspannungsmast Zug- oder Druckbeanspruchungen, Torsionsbeanspruchungen, Biegemomente und dgl. aufzunehmen hat. Derartige Beanspruchungen muss der Hochspannungsmast vor allem bei extremen Wetterbedingungen, beispielsweise bei Stürmen aufnehmen.

Der Erfindung liegt die überraschende Erkenntnis zugrunde, dass die erfindungsgemäße Erhitzung in den Schraubenlochrandzonen der Schraubenlöcher ausreicht, um eine effektive Sanierung herbeizuführen und die Stahlprofile vor Beschädigungen wie Rissen und Brüchen wirksam zu schützen. Überraschend ist dabei insbesondere, dass mit verhältnismäßig einfachen und wenig aufwendigen Maßnahmen die Aufnahmefähigkeit der Stahlprofile für Belastungen so erhöht werden kann, dass auch extreme Beanspruchungen der Hochspannungsmasten zu keinen nennenswerten Beschädigungen in den behandelten Bereichen führen.

Nach sehr bevorzugter Ausführungsform, der im Rahmen der Erfindung ganz besondere Bedeutung zukommt, wird die Erhitzung von versprödeten Schraubenlochrandzonen bei auf Zug beanspruchten Stahlprofilen durchgeführt. Auf Zug beanspruchte Stahlprofile meint dabei insbesondere die Eckstiele sowie die die Eckstiele verbindenden Diagonalprofile eines Hochspannungsmastes. Vorzugsweise werden also vor allem die Schraubenlochrandzonen der Schraubverbindungen zwischen Eckstielen und Diagonalprofilen erfindungsgemäß behandelt. Es hat sich gezeigt, dass dadurch die Begastbarkeit, insbesondere die Belastbarkeit des Hochspannungsmastes auf Zug überraschend beachtlich erhöht werden kann.

Nach bevorzugter Ausführungsform der Erfindung werden die Schraubenlochrandzonen auf eine Temperatur von 740 °C bis 950 °C erhitzt. Bevorzugt erfolgt die Erhitzung im Temperaturbereich von 740 °C bis 800 °C. Es liegt im Rahmen der Erfindung, dass der Schraubenlochrandbereich eines Schraubenloches so hoch und so lange aufgeheizt wird, bis sich das spröde Stahlgefüge entspannt bzw. rekristallisiert hat. Anschließend lässt man die erhitzten Schraubenlochrandzonen bei Umgebungsbedingungen abkühlen.

Nach sehr bevorzugter Ausführungsform, der im Rahmen der Erfindung ganz besondere Bedeutung zukommt, wird die Erhitzung der Schraubenlochrandbereiche durch induktive Erwärmung bzw. Erhitzung erreicht. Es liegt im Rahmen der Erfindung, die Schraubenlochrandbereiche durch Wirbelströme aufzuheizen. Vorzugsweise wird somit die Erhitzung der Schraubenlochrandbereiche mittels einer Wirbelstromheizung durchgeführt. Auf diese Weise können die versprödeten Schraubenlochrandbereiche sehr gezielt erhitzt werden bzw. die zur Aufheizung verwendete elektrische Energie kann auf einen lokal eng begrenzten Bereich effektiv einwirken.

Nach einer anderen Ausführungsform der Erfindung wird die Erhitzung der Schraubenlochrandbereiche mit einem Gasbrenner durchgeführt. - Es liegt im Rahmen der Erfindung, dass während der Erhitzung die Temperatur in den Schraubenlochrandbereichen überwacht wird. Vorzugsweise erfolgt diese Temperaturüberwachung durch eine berührungslose Temperaturmessung. Zweckmäßigerweise wird für die berührungslose Temperaturmessung der Temperatur in den Schraubenlochrandbereichen zumindest ein Strahlungsthermometer eingesetzt, bevorzugt ein Infrarotstrahlungsthermometer.

Bei einem zu behandelnden Schraubenlochrandbereich handelt es sich vorzugsweise um einen Bereich mit einer Breite von 1 bis 10 mm, bevorzugt von 2 bis 4 mm, gemessen vom Schraubenlochrand aus. Diese Schraubenlochrandbereiche erstrecken sich in der Regel um den gesamten Umfang eines Schraubenloches. Es liegt im Rahmen der Erfindung, dass Schraubenlochrandbereiche bis zu einem Abstand von 15 mm, vorzugsweise von 10 mm, vom Schraubenlochrand erhitzt werden. Zweckmäßigerweise finden vor der Erhitzung der Schraubenlochrandbereiche Voruntersuchungen an den Stahlprofilen statt, um die Abmessungen der Versprödungsbereiche festzustellen und anschließend erfolgt dann eine gezielte Erhitzung der versprödeten Schraubenlochrandbereiche.

Nachfolgend wird die Erfindung anhand einer lediglich ein Ausführungsbeispiel darstellenden Zeichnung näher erläutert. Es zeigen in schematischer Darstellung:
- Fig. 1: eine Ansicht eines Hochspannungsmastes aus Stahlprofilen und
- Fig. 2: den stark vergrößerten Ausschnitt A aus dem Gegenstand nach Fig. 1.

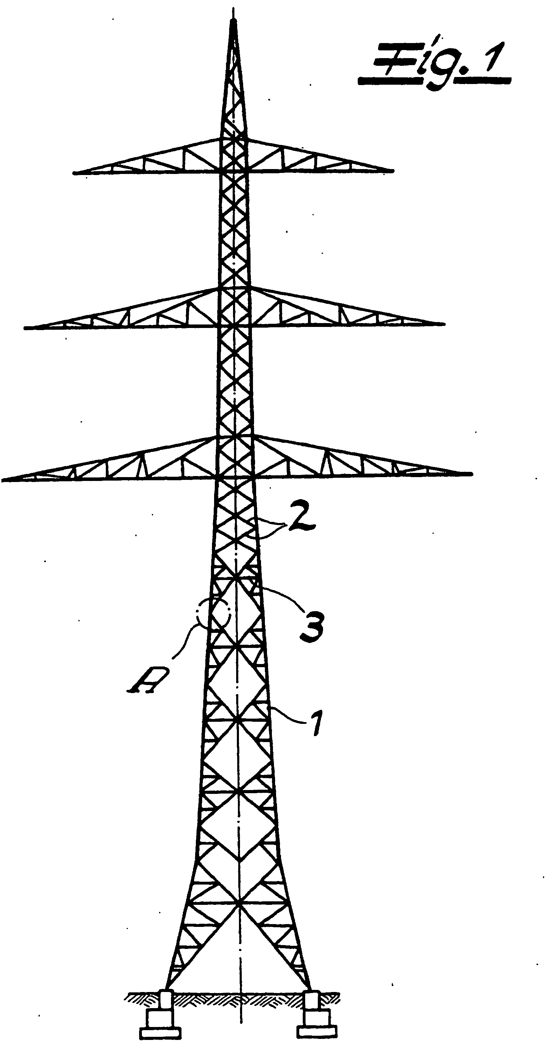

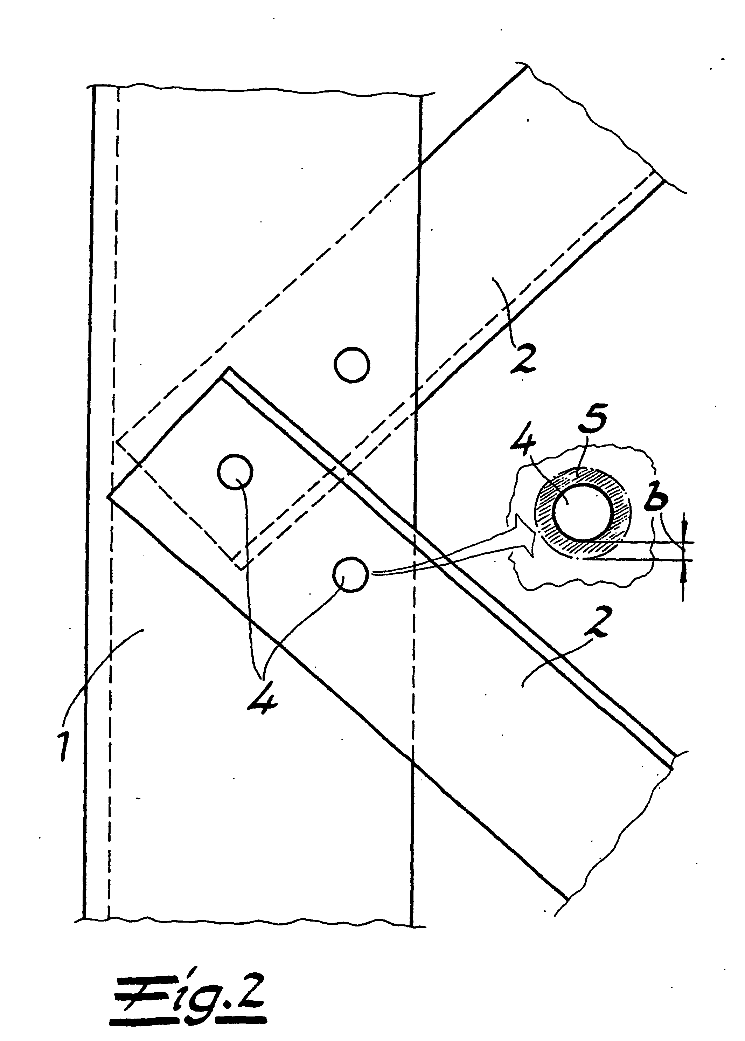

Fig. 1 zeigt einen Hochspannungsmast, der als Stahlgitterkonstruktion ausgeführt ist. Der Hochspannungsmast besteht aus Stahlprofilen, bei denen es sich insbesondere um die Eckstiele 1, Diagonalprofile 2 und Horizontaltraversen 3 handelt. Die Stahlprofile weisen an ihren Verbindungsstellen Schraubverbindungen mit entsprechenden Schraubenlöchern 4 auf (Fig. 2). Erfindungsgemäß werden versprödete Schraubenlochrandzonen 5 solcher Schraubenlöcher 4 gezielt auf eine Temperatur von über 740 °C erhitzt und zwar um die Versprödung zu beseitigen oder um das Ausmaß der Versprödung zumindest zu reduzieren. In dem vergrößerten Ausschnitt der Fig. 2 ist erkennbar, dass eine versprödete Schraubenlochrandzone 5 sich in der Regel um den gesamten Umfang des Schraubenloches erstreckt. In diesem vergrößerten Ausschnitt wurde die äußere Grenze der Schraubenlochrandzone 5 der Einfachheit halber exakt kreisförmig gezeichnet. Eine solche versprödete Schraubenlochrandzone 5 hat beispielsweise eine Breite b von 5 mm und diese versprödete Schraubenlochrandzone 5 wird erfindungsgemäß gezielt erhitzt, beispielsweise durch induktive Erwärmung mittels einer Wirbelstromheizung oder mit einem Gasbrenner.

## Patentansprüche

1. Verfahren zur Sanierung von in Stahlgitterbauweise hergestellten Hochspannungsmasten mit Stahlprofilen, die an ihren Verbindungsstellen Schraubverbindungen mit entsprechenden Schraubenlöchern (4) aufweisen, **dadurch gekennzeichnet, dass** versprödete Schraubenlochrandzonen (5) solcher Schraubenlöcher (4) gezielt auf eine Temperatur von mindestens 740 °C erhitzt werden, und anschließend wieder abgekühlt werden.

2. Verfahren nach Anspruch 1, **dadurch gekennzeichnet, dass** die Erhitzung der versprödeten Schraubenlochrandzonen (5) bei auf Zug beanspruchten Stahlprofilen durchgeführt wird.

3. Verfahren nach einem der Ansprüche 1 oder 2, **dadurch gekennzeichnet, dass** die Schraubenlochrandzonen (5) auf eine Temperatur von 740 °C bis 950 °C erhitzt werden.

4. Verfahren nach einem der Ansprüche 1 bis 3, **dadurch gekennzeichnet, dass** die Erhitzung der Schraubenlochrandzonen (5) mittels einer Wirbelstromheizung durchgeführt wird.

5. Verfahren nach einem der Ansprüche 1 bis 3, **dadurch gekennzeichnet, dass** die Erhitzung der Schraubenlochrandzonen (5) mit einem Gasbrenner durchgeführt wird.

6. Verfahren nach einem der Ansprüche 1 bis 5, wobei die Temperatur bei der Erhitzung der Schraubenlochrandzonen (5) mit einem Strahlungsthermometer, vorzugsweise mit einem Infrarot-Strahlungsthermometer überwacht wird.

7. Verfahren nach einem der Ansprüche 1 bis 6, **dadurch gekennzeichnet, dass** Schraubenlochrandzonen (5) mit einer Breite von 1 bis 10 mm, vorzugsweise 1 bis 5 mm, gemessen vom Schraubenlochrand aus, erhitzt werden.

## Claims

1. A method for remediating high-voltage masts manufactured in a steel grid construction with steel profiles which at their connection points have screw connections with corresponding screw holes (4), **characterised in that** embrittled screw-hole edge zones (5) of such screw holes (4) are specifically heated to a temperature of at least 740 °C and then cooled down again.

2. The method according to claim 1, **characterised in that** the heating of the embrittled screw-hole edge zones (5) is carried out with tensile-stressed steel profiles.

3. The method according to any one of claims 1 or 2, **characterised in that** the screw-hole edge zones (5) are heated to a temperature of 740 °C to 950 °C.

4. The method according to any one of claims 1 to 3, **characterised in that** the heating of the screw-hole edge zones (5) is carried out by means of eddy current heating.

5. The method according to any one of claims 1 to 3, **characterised in that** the heating of the screw-hole edge zones (5) is carried out using a gas burner.

6. The method according to any one of claims 1 to 5, **characterised in that** the heating of the screw-hole edge zones (5) is monitored using a radiation thermometer, preferably using an infrared radiation thermometer.

7. The method according to any one of claims 1 to 6, **characterised in that** screw-hole edge zones (5) with a width of 1 to 10 mm, preferably 1 to 5 mm, measured from the screw-hole edge, are heated.

## Revendications

1. Procédé de rénovation de pylônes à haute tension fabriqués à la manière de grilles d'acier à l'aide de profilés d'acier qui présentent, à leurs points de raccordement, des raccordements vissés à trous de vis correspondants (4), **caractérisé en ce que** les zones périphériques fragilisées de trous de vis (5) de tels trous de vis (4) sont chauffées de manière ciblée à une température d'au moins 740 °C et ensuite de nouveau refroidies.

2. Procédé selon la revendication 1, **caractérisé en ce que** le chauffage des zones périphériques fragilisées des trous de vis (5) est réalisé sur des profilés d'acier sollicités à la traction.

3. Procédé selon l'une quelconque des revendications 1 ou 2, **caractérisé en ce que** les zones périphériques des trous de vis (5) sont chauffées à une température de 740 °C à 950 °C.

4. Procédé selon l'une quelconque des revendications 1 à 3, **caractérisé en ce que** le chauffage des zones périphériques des trous de vis (5) est réalisé au moyen d'un chauffage à courant tourbillonnant.

5. Procédé selon l'une quelconque des revendications 1 à 3, **caractérisé en ce que** le chauffage des zones périphériques des trous de vis (5) est réalisé à l'aide d'un chalumeau à gaz.

6. Procédé selon l'une quelconque des revendications 1 à 5, dans lequel la température lors du chauffage des zones périphériques des trous de vis (5) est contrôlée à l'aide d'un thermomètre à rayonnement, de préférence à l'aide d'un thermomètre à rayonnement infrarouge.

7. Procédé selon l'une quelconque des revendications 1 à 6, **caractérisé en ce que** les zones périphériques des trous de vis (5) d'une largeur de 1 à 10 mm, de préférence 1 à 5 mm, mesurée depuis la périphérie du trou de vis, sont chauffées.
